# EUROPEAN PATENT APPLICATION

(11) **EP 1 811 797 A1**
(43) Date of publication of application: **25.07.2007**
(21) Application number: 07001065.7
(22) Date of filing: 18.01.2007
(51) Int. Cl.: H04Q 7/34

(54) **Tester and test system for wireless device**

(30) Priority: 19.01.2006 JP 2006011338
(71) Applicant: Yokogawa Electric Corporation, Tokyo 180-8750 (JP)
(72) Inventor: Ishidu, Tetsu, Musashino-shi Tokyo 180-8750 (JP)
(74) Representative: Grünecker, Kinkeldey, Stockmair & Schwanhäusser Anwaltssozietät

(57) **Abstract**

A tester for a wireless device includes a memory for storing a communication command program that makes the tester to transmit a communication command signal to the wireless device so that a test corresponding to the communication command signal is performed in the wireless device, wherein the communication command program is output from an external control computer and input to the tester so as to be stored in the memory.

## Description

This application claims foreign priority based on Japanese Patent application No. 2006-011338, filed January 19, 2006, the content of which is incorporated herein by reference in its entirety.

### BACKGROUND OF THE INVENTION

### 1. Field of the Invention

The present invention relates to a tester and a test system of a mobile wireless device (for example, a mobile phone), by which a simplification of the system is achieved.

### 2. Description of the Related Art

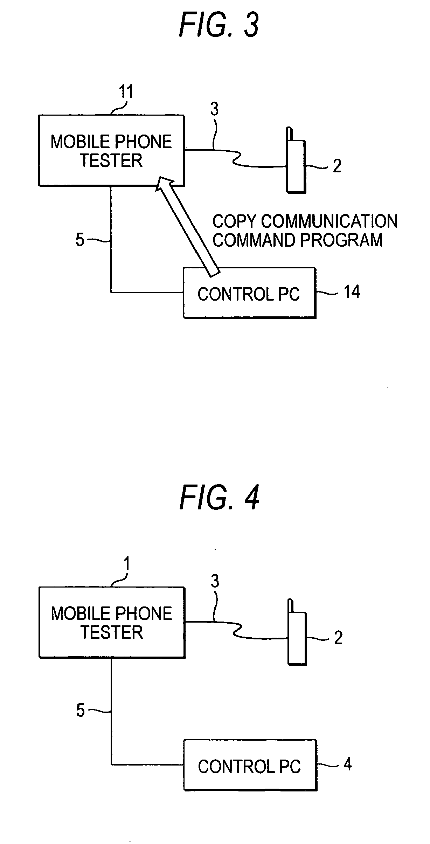

As a system for testing performance of a mobile phone, a system of a configuration shown in Fig. 4 has been known. In Fig. 4, numeral 1 is a mobile phone tester and numeral 2 is a mobile phone, and these are connected through an RF (radio frequency) cable 3. Numeral 4 is a control PC (personal computer), and is connected to the mobile phone tester 1 by a Serial or GPIB (general-purpose interface bus) cable 5.

In the configuration described above, a communication command program is sent from the control PC 4 to the mobile phone tester through the cable 5, and the mobile phone tester sends a test item to the mobile phone according to the communication command program. The mobile phone 2 receives the test item, and sends a state of the mobile phone 2 to the mobile phone tester 1.

In addition, a related art of a mobile wireless device test system includes the art shown in, for example, JP-A-2004-23755.

By the way, in the example described above, a communication command is provided by connecting the external control PC 4 to the mobile phone tester 1 through the cable. Thus, there is a problem that the external control PC is required in a manufacturing line.

That is, since the external control PC is required together with the mobile phone tester, maintenance and installation of the PC is required. Further, the cable for making connection with the mobile phone tester is also required, so that there is a problem that a range of installation of the control PC or the mobile phone tester is limited.

### SUMMARY OF THE INVENTION

The present invention has been made in view of the above circumstances, and provides a mobile wireless device test system and a tester for increasing flexibility of an installation area of the test system and the tester, by eliminating the need for an external control PC or a cable by providing a communication command program of the external control PC to a mobile phone tester, the communication command program being created for evaluation of a mobile phone.

In some implementations, a tester of the invention for a wireless device, comprising:
a memory for storing a communication command program that makes the tester to transmit a communication command signal to the wireless device so that a test corresponding to the communication command signal is performed in the wireless device,
wherein the communication command program is output from an external control computer and input to the tester so as to be stored in the memory.

In the tester for a wireless device, the wireless device is a mobile phone.

In the tester for a wireless device, the communication command program is stored in a free space of the memory.

In the tester for a wireless device, the communication command program is stored in the memory that is newly provided to a memory area of the tester.

In some implementations, a test system for a wireless device, comprising:
the wireless device; and
a tester having a memory for storing a communication command program that makes the tester to transmit a communication command signal to the wireless device so that a test corresponding to the communication command signal is performed in the wireless device,
wherein the communication command program is output from an external control computer and input to the tester so as to be stored in the memory.

In the test system for a wireless device, the wireless device is a mobile phone.

In the test system for a wireless device, the communication command program is stored in a free space of the memory. In the test system for a wireless device, the communication command program is stored in the memory that is newly provided to a memory area of the tester.

### BRIEF DESCRIPTION OF THE DRAWINGS

Fig. 1 is ablockconfigurationdiagramof amobilewireless device test system showing one embodiment of the invention.
Fig. 2 is a process diagram showing a storing process of the mobile wireless device test system of one embodiment of the invention.
Fig. 3 is a process diagram showing a storing process of the mobile wireless device test system of one embodiment of the invention.
Fig. 4 is a block configuration diagram showing one example of a mobile wireless device test system of a related art.

### DESCRIPTION OF THE PREFERRED EMBODIMENTS

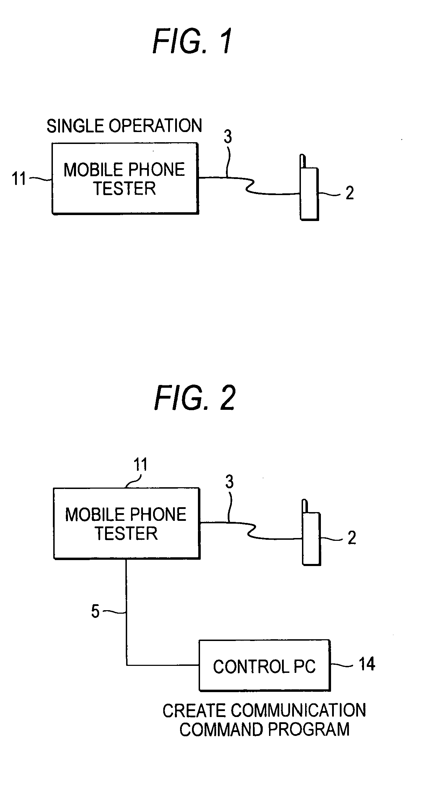

Fig. 1 is a block configuration diagram showing one embodiment of the invention. In the diagram, numeral 11 is a mobile phone tester, and a function of the control PC (personal computer) used in the related example shown in Fig. 4 is stored in this tester. Numeral 2 is a mobile phone similar to that of the related example and is connected to the mobile phone tester 11 through an RF (radio frequency) cable 3.

In Fig. 1, the function of the control PC is stored in the mobile phone tester 11, so that the control PC and the serial or GPIB (general-purpose interface bus) cable 5 for making connection between this control PC and the mobile phone tester 11 which are connected in the related art are unnecessary.

In Fig. 1, by using the function of the control PC incorporated in the mobile phone tester 11, a communication command signal is sent to the mobile phone. Then, a test corresponding to the signal is carried out, and the mobile phone 2 receives the test item and sends a state of the mobile phone 2 to the mobile phone tester 11.

Next, a process of storing a communication command program created by a control PC 14 in the mobile phone tester 11 will be described by using Figs. 2 and 3.

In Fig. 2, the communication command program is created by the control PC 14.

Then, in Fig. 3, this communication command program is written into free memory space of the mobile phone tester 11 through the serial or GPIB cable 5. When there is no space for writing, memory is added to the mobile phone tester 11 and the program is written into the added memory.

According to the configuration described above, the mobile phone tester 11 can have a function of the control PC, and an external control PC or the serial or GPIB cable 5 are unnecessary. Thus, a mobile wireless device test system and a tester for increasing flexibility of an installation area of the test system and a tester can be implemented.

According to the tester and the test systemof the invention, a mobile wireless device test system and a tester for a wireless device are obtained in which the external control PC and the cable for connecting the external control PC and the tester are unnecessary and flexibility of an installation area of the tester and the test system is increased.

In addition, in the above description, the particular preferred embodiment has been only shown for the purpose of illustration and description of the invention. In the invention, the test system in which the mobile phone tester is connected to the mobile phone by the RF cable has been shown, however, the mobile phone tester may be connected to the mobile phone by wireless without the RF cable. Also, in the invention, the mobile phone has been used as a mobile wireless device, but other mobile wireless devices may be used. Furthermore, in the tester according to an embodiment of the invention, transmission from the external control PC to the tester may be performed via a serial or GPIB (general-purpose interface bus) cable, and may be performed by wired connection such as a cable other than the serial or GPIB cable, by wireless, by a removable auxiliary storage medium such as a flexible disk and a USB (Universal Serial Bus) memory, etc. Therefore, the invention is not limited to the embodiment described above, and includes more changes and modifications without departing from the essence.

It will be apparent to those skilled in the art that various modifications and variations can be made to the described preferred embodiments of the present invention without departing from the spirit or scope of the invention. Thus, it is intended that the present invention cover all modifications and variations of this invention consistent with the scope of the appended claims and their equivalents.

## Claims

1. A tester for a wireless device, comprising:
a memory for storing a communication command program that makes the tester to transmit a communication command signal to the wireless device so that a test corresponding to the communication command signal is performed in the wireless device,
wherein the communication command program is output from an external control computer and input to the tester so as to be stored in the memory.

2. The tester for a wireless device as claimed in claim 1, wherein the wireless device is a mobile phone.

3. The tester for a wireless device as claimed in claim 1, wherein the communication command program is stored in a free space of the memory.

4. The tester for a wireless device as claimed in claim 1, wherein the communication command program is stored in the memory that is newly provided to a memory area of the tester.

5. A test system for a wireless device, comprising:
the wireless device; and
a tester having a memory for storing a communication command program that makes the tester to transmit a communication command signal to the wireless device so that a test corresponding to the communication command signal is performed in the wireless device,
wherein the communication command program is output from an external control computer and input to the tester so as to be stored in the memory.

6. The test system for a wireless device as claimed in claim 5, wherein the wireless device is a mobile phone.

7. The test system for a wireless device as claimed in claim 5, wherein the communication command program is stored in a free space of the memory.

8. The test system for a wireless device as claimed in claim 5, wherein the communication command program is stored in the memory that is newly provided to a memory area of the tester.
